# EUROPEAN PATENT APPLICATION

(11) **EP 3 312 726 A1**
(43) Date of publication of application: **25.04.2018**
(21) Application number: 16811545.9
(22) Date of filing: 09.06.2016
(51) Int. Cl.: G06F 11/07

(54) **CPU MONITORING DEVICE**

(30) Priority: 16.06.2015 JP 2015121490
(71) Applicant: Olympus Corporation, Hachioji-shi Tokyo 192-8507 (JP)
(72) Inventor: MACHIDA, Takashi, Hachioji-shi Tokyo 192-8507 (JP)
(74) Representative: Gunzelmann, Rainer
(86) International application number: PCT/JP2016/067261
(87) International publication number: WO 2016/204070

(57) **Abstract**

A CPU monitoring device includes a memory that includes a plurality of memory areas arranged corresponding to a plurality of CPU cores; a monitoring unit that monitors whether processing performed in the plurality of CPU cores is operating normally, on the basis of an update state of data recorded in the plurality of memory areas; and a reset signal output unit that outputs a reset signal to the plurality of CPU cores when the monitoring unit has detected that the processing performed in the plurality of CPU cores is not operating normally, wherein idle processing is assigned to each of the plurality of CPU cores, the idle processing having the lowest processing priority in the CPU core and updating data recorded in a memory area arranged corresponding to the CPU core.

## Description

### Technical Field

The present invention relates to a CPU monitoring device that monitors a multicore CPU.

### Related Art

In recent years, there has been an increase in the number of devices provided with a multicore CPU instead of a single-core CPU (central processing unit) in order to, for example, improve a processing speed or reduce power consumption.

With respect to a device in the medical field, any anomalous operation in the device is not acceptable, so when a multicore CPU is provided instead of a single-core CPU, there is a need for a scheme that monitors the multicore CPU and restarts the multicore CPU to return it to a normal state when the multicore CPU enters into an anomalous state (such as a state in which a CPU core goes out of control).

The following device is known as a device that monitors a multicore CPU.

For example, an electronic controller is known that is able to monitor a microcomputer's going out of control properly by use of only one monitoring unit even if the microcomputer has a plurality of cores in the same package (see Patent Document 1). Further, for example, a CPU monitoring device is known that is able to monitor a CPU's going out of control properly without increasing the number of monitoring circuits even if a microcomputer system includes three or more CPUs, and to easily determine in which of the CPUs there has occurred an anomaly when a monitoring circuit is shared (see Patent Document 2).

### Citation List

### Patent Document

Patent Document 1: Japanese Laid-open Patent Publication No. 2010-33475
Patent Document 2: Japanese Laid-open Patent Publication No. 2009-53952

### Summary of Invention

### Technical Problem

An object of the present invention is to provide a CPU monitoring device that is able to restart a multicore CPU quickly when the multicore CPU enters into an anomalous state. Solution to Problem

A first aspect of the present invention provides a CPU monitoring device including: a memory that includes a plurality of memory areas arranged corresponding to a plurality of CPU cores; a monitoring unit that monitors whether processing performed in the plurality of CPU cores is operating normally, on the basis of an update state of data recorded in the plurality of memory areas; and a reset signal output unit that outputs a reset signal to the plurality of CPU cores when the monitoring unit has detected that the processing performed in the plurality of CPU cores is not operating normally, wherein idle processing is assigned to each of the plurality of CPU cores, the idle processing having the lowest processing priority in the CPU core and updating data recorded in a memory area arranged corresponding to the CPU core.

A second aspect of the present invention provides the CPU monitoring device according to the first aspect, wherein processing other than the idle processing is dynamically assigned to each of the plurality of CPU cores according to a load state of each of the plurality of CPU cores.

A third aspect of the present invention provides the CPU monitoring device according to the second aspect, wherein the processing other than the idle processing includes first processing that includes processing of updating data recorded in the memory area arranged corresponding to the CPU core assigned to the first processing.

A fourth aspect of the present invention provides the CPU monitoring device according to the second or third aspect, wherein the processing other than the idle processing includes second processing that does not include processing of updating data recorded in the memory area arranged corresponding to the CPU core assigned to the second processing.

A fifth aspect of the present invention provides the CPU monitoring device according to the fourth aspect, wherein the second processing is assigned to each of the plurality of CPU cores within less than 50% of resources of the CPU core.

### Advantageous Effects of Invention

According to the present invention, an advantage is provided such that a multicore CPU can be restarted quickly when the multicore CPU enters into an anomalous state.

### Brief Description of Drawings

FIG. 1 illustrates an example of a configuration of a multicore CPU system that includes a CPU monitoring device according to an embodiment;
FIG. 2A illustrates an example of updating processing and non-updating processing assigned to each of a first CPU core and a second CPU core;
FIG. 2B illustrates another example of the updating processing and the non-updating processing assigned to each of the first CPU core and the second CPU core;
FIG. 3A illustrates an example of a timing chart of an operation of the multicore CPU system when the first CPU core and the second CPU core are operating normally; and
FIG. 3B illustrates an example of a timing chart of the operation of the multicore CPU system when the second CPU core does not operate normally.

### Description of Embodiments

Embodiments will now be described with reference to the drawings.

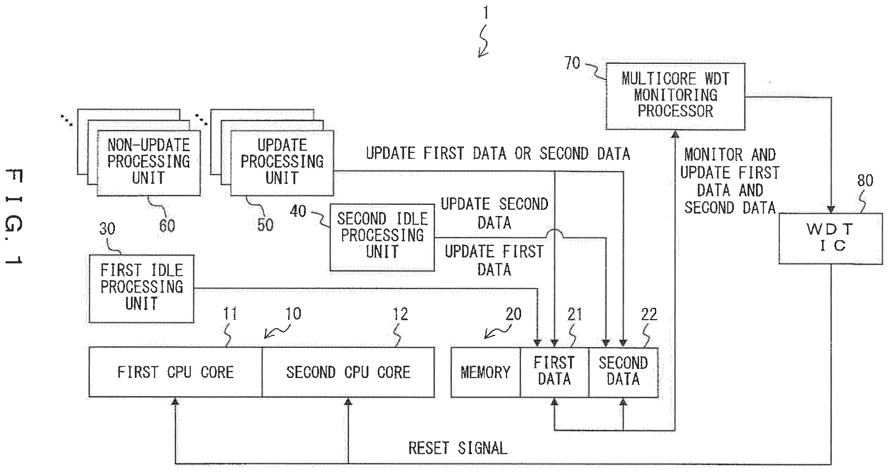

FIG. 1 illustrates an example of a configuration of a multicore CPU system that includes a CPU monitoring device according to an embodiment of the present invention. This multicore CPU system is, for example, a medical device such as an image processing device that processes image data obtained by a medical endoscope.

In FIG. 1, a multicore CPU system 1 includes a multicore CPU 10, a memory 20, a first idle processing unit 30, a second idle processing unit 40, an update processing unit 50, non-update processing unit 60, a multicore WDT (watchdog timer) monitoring processor 70, and a WDT IC (watchdog-timer integrated circuit) 80.

The multicore CPU 10 is a dual-core CPU that includes a first CPU core 11 and a second CPU core 12.

The memory 20 includes a first memory area 21 that is arranged corresponding to the first CPU core 11 and a second memory area 22 that is arranged corresponding to the second CPU core 12. First data is recorded in the first memory area 21, and second data is recorded in the second memory area 22. In the present embodiment, "0" or "1" is recorded as the first data, and "0" or "1" is recorded as the second data.

The first idle processing unit 30 is a processing unit that is realized by first idle processing assigned to only the first CPU core 11 being performed by the first CPU core 11. The first idle processing is processing that has the lowest processing priority in the first CPU core 11 and updates first data recorded in the first memory area 21. In the present embodiment, processing of changing the first data to "1" is performed as the processing of updating the first data.

The second idle processing unit 40 is a processing unit that is realized by second idle processing assigned to only the second CPU core 12 being performed by the second CPU core 12. The second idle processing is processing that has the lowest processing priority in the second CPU core 12 and updates second data recorded in the second memory area 22. In the present embodiment, processing of changing the second data to "1" is performed as the processing of updating the second data.

The update processing unit 50 is a processing unit that is realized by updating processing being performed by the first CPU core 11 or the second CPU core 12, the updating processing being dynamically assigned to the first CPU core 11 or the second CPU core 12 according to a load state of each of the first CPU core 11 and the second CPU core 12. The updating processing is, for example, processing of an application software of a video display or the like, and includes the processing of updating first data recorded in the first memory area 21 arranged corresponding to the first CPU core 11 to which the updating processing is assigned or the processing of updating second data recorded in the second memory area 22 arranged corresponding to the second CPU core 12 to which the updating processing is assigned. In the present embodiment, processing of changing the first data or the second data to "1" is performed as the processing of updating the first data or the second data.

The non-update processing unit 60 is a processing unit that is realized by non-updating processing being performed by the first CPU core 11 or the second CPU core 12, the non-updating processing being dynamically assigned to the first CPU core 11 or the second CPU core 12 according to the load state of each of the first CPU core 11 and the second CPU core 12. The non-updating processing is, for example, processing of an OS (operating system) or the like, and does not include the processing of updating first data recorded in the first memory area 21 arranged corresponding to the first CPU core 11 to which the non-updating processing is assigned or the processing of updating second data recorded in the second memory area 22 arranged corresponding to the second CPU core 12 to which the non-updating processing is assigned.

The multicore WDT monitoring processor 70 monitors whether processing performed in the first CPU core 11 and processing performed in the second CPU core 12 are operating normally, on the basis of update states of first data recorded in the first memory area 21 and second data recorded in the second memory area 22. In the present embodiment, the multicore WDT monitoring processor 70 monitors first data recorded in the first memory area 21 and second data recorded in the second memory area 22 at predetermined time intervals, and updates the first data and the second data. The updating of the first data and the second data is performed by changing the first data and the second data to "0". Further, when first data or second data is "0", for example, at a plurality of consecutive monitoring timings at predetermined time intervals, the multicore WDT monitoring processor 70 determines that the processing performed in the first CPU core 11 or the second CPU core 12 is not operating normally, so as to detect an anomaly in the first CPU core 11 or the second CPU core 12. Further, when it has detected an anomaly in the first CPU core 11 or the second CPU core 12, the multicore WDT monitoring processor 70 outputs, to the WDT IC 80, "0" indicating that there occurs an anomaly in the first CPU core 11 or the second CPU core 12. When it has not detected an anomaly in the first CPU core 11 or the second CPU core 12, the multicore WDT monitoring processor 70 outputs, to the WDT IC 80, "1" indicating that the first CPU core 11 and the second CPU core 12 are in a normal state.

When the multicore WDT monitoring processor 70 has detected that the processing performed in the first CPU core 11 and the processing performed in the second CPU core 12 are not operating normally, the WDT IC 80 outputs a reset signal to the first CPU core 11 and the second CPU core 12. The reset signal is a signal that restarts the first CPU core 11 and the second CPU core 12. In the present embodiment, when an output signal of the multicore WDT monitoring processor 70 has been changed from "1" to "0", the WDT IC 80 outputs a reset signal to the first CPU core 11 and the second CPU core 12.

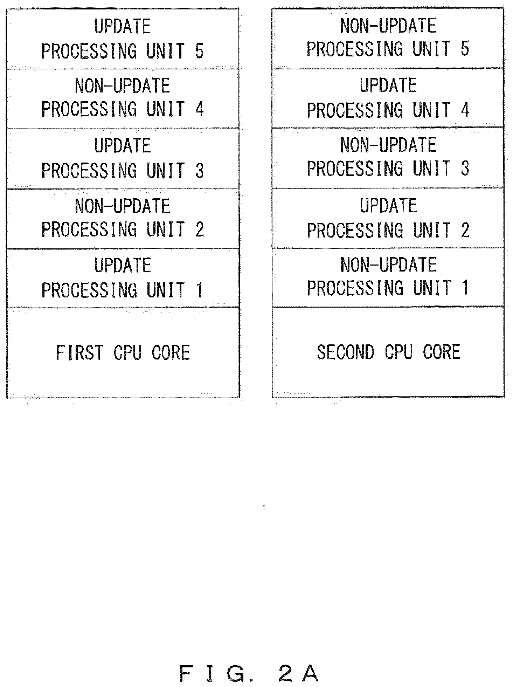

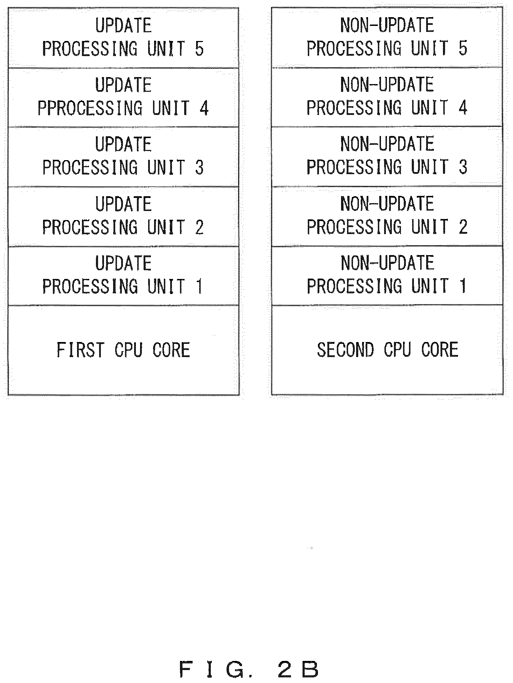

In the multicore CPU system 1 having such a configuration, each of the updating processing and the non-updating processing is dynamically assigned to the first CPU core 11 or the second CPU core 12 according to the load state of each of the first CPU core 11 and the second CPU core 12, as described above. Thus, there will be no problems if the updating processing ("update processing unit") and the non-updating processing ("non-update processing unit") are assigned in each of the first CPU core 11 and the second CPU core 12 such that they are performed alternately, for example as illustrated in FIG. 2A. However, the multicore WDT monitoring processor 70 may falsely detect that there occurs an anomaly in the second CPU core 12 when the non-updating processing ("non-update processing unit") is assigned to only the second CPU core 12, for example as illustrated in FIG. 2B, because second data recorded in the second memory area 22 will not be updated. Thus, in order to prevent such a false detection, the multicore CPU system 1 is configured such that the non-updating processing is assigned to the first CPU core 11 within less than 50% of resources of the first CPU core 11 and the non-updating processing is assigned to the second CPU core 12 within less than 50% of resources of the second CPU core 12. The multicore WDT monitoring processor 70 is configured to not detect falsely that there occurs an anomaly in the first CPU core 11 or the second CPU core 12 when the non-updating processing is assigned under these conditions. In FIGS. 2A and 2B, the number ("1", "2", "3", "4", and "5") that follows "UPDATE PROCESSING UNIT" or "NON-UPDATE PROCESSING UNIT" represents a processing priority in the first CPU core 11 or the second CPU core 12.

In the multicore CPU system 1 having such a configuration, the memory 20 that includes the first memory area 21 arranged corresponding to the first CPU core 11 and the second memory area 22 arranged corresponding to the second CPU core 12 is an example of a memory that includes a plurality of memory areas arranged corresponding to a plurality of CPU cores. The multicore WDT monitoring processor 70 is an example of a monitoring unit that monitors whether processing performed in each of the plurality of CPU cores is operating normally, on the basis of an update state of data recorded in each of the plurality of memory areas. The WDT IC 80 is an example of a reset signal output unit that outputs a reset signal to the plurality of CPU cores when the monitoring unit has detected that the processing performed in each of the plurality of CPU cores is not operating normally. The first idle processing (the first idle processing unit 30) and the second idle processing (the second idle processing unit 40) are examples of idle processing (processing that has the lowest processing priority in the CPU core and updates data recorded in a memory area arranged corresponding to the CPU core) that is assigned to each of the plurality of the CPU cores. The updating processing (the update processing unit 50) is an example of first processing (including the processing of updating data recorded in a memory area arranged corresponding to a CPU core to which the first processing is assigned). The non-updating processing (the non-update processing unit 60) is an example of second processing (not including the processing of updating data recorded in a memory area arranged corresponding to a CPU core to which the second processing is assigned).

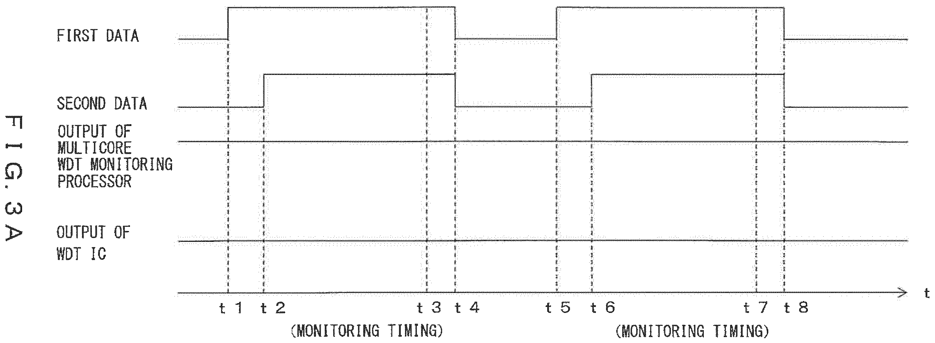

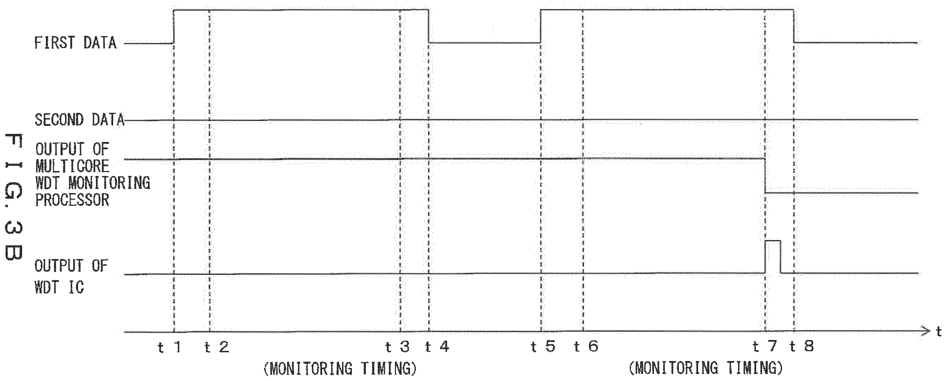

FIGS. 3A and 3B illustrate examples of timing charts of an operation of the multicore CPU system 1. In more detail, FIG. 3A illustrates an example of a timing chart when the first CPU core 11 and the second CPU core 12 are operating normally, and FIG. 3B illustrates an example of a timing chart when the second CPU core 12 was supposed to operate similarly to FIG. 3A but is not operating normally.

In the example of FIG. 3A, first data recorded in the first memory area 21 is updated, at a time t1, to "1" by updating processing performed in the first CPU core 11 according to the processing priority. Further, second data recorded in the second memory area 22 is updated, at a time t2 that is a time after the time t1, to "1" by updating processing performed in the second CPU core 12 according to the processing priority. It is assumed that the initial values of the first data recorded in the first memory area 21 and the second data recorded in the second memory area 22 are "0".

After that, at a time t3 that is a time for a timing of monitoring performed by the multicore WDT monitoring processor 70, the first data recorded in the first memory area 21 and the second data recorded in the second memory area 22 are read by the multicore WDT monitoring processor 70. At this point, the first data and the second data are both "1", so the multicore WDT monitoring processor 70 does not detect an anomaly in the first CPU core 11 or the second CPU core 12. Thus, the output of the multicore WDT monitoring processor 70 remains "1" indicating that the first CPU core 11 and the second CPU core 12 are in a normal state. It is assumed that the initial value of the output of the multicore WDT monitoring processor 70 is "1". Thus, the output of the WDT IC 80 remains "0", and a reset signal (one pulse signal) is not output. Then, at a time t4 that is a time after the time t3, both the first data recorded in the first memory area 21 and the second data recorded in the second memory area 22 are updated to "0" by the multicore WDT monitoring processor 70.

After that, the first data recorded in the first memory area 21 is updated, at a time t5, to "1" by updating processing (or first idle processing) performed next in the first CPU core 11 according the processing priority. Further, the second data recorded in the second memory area 22 is updated, at a time t6 that is a time after the time t5, to "1" by updating processing (or second idle processing) performed next in the second CPU core 12 according the processing priority.

After that, at a time t7 that is a time for a next timing of monitoring performed by the multicore WDT monitoring processor 70, the first data recorded in the first memory area 21 and the second data recorded in the second memory area 22 are read by the multicore WDT monitoring processor 70. At this point, the first data and the second data are both "1", so the multicore WDT monitoring processor 70 does not detect an anomaly in the first CPU core 11 or the second CPU core 12. Thus, the output of the multicore WDT monitoring processor 70 remains "1" indicating that the first CPU core 11 and the second CPU core 12 are in a normal state, and the output of the WDT IC 80 remains "0". Then, at a time t8 that is a time after the time t7, both the first data recorded in the first memory area 21 and the second data recorded in the second memory area 22 are updated to "0" by the multicore WDT monitoring processor 70.

When the first CPU core 11 and the second CPU core 12 are operating normally, the operation described above is performed repeatedly.

On the other hand, in the example of FIG. 3B, the first data recorded in the first memory area 21 is updated, at the time t1, to "1" by the updating processing performed in the first CPU core 11 according to the processing priority. However, at the time t2 that is a time after the time t1, the updating processing performed in the second CPU core 12 according to the processing priority is not operating normally due to an anomaly in the second CPU core 12 (such as due to the second CPU core 12 going out of control), so the second data recorded in the second memory area 22 is not updated (to "1") . Thus, the second data remains "0".

After that, at the time t3 that is a time for a timing of monitoring performed by the multicore WDT monitoring processor 70, the first data recorded in the first memory area 21 and the second data recorded in the second memory area 22 are read by the multicore WDT monitoring processor 70. It is assumed that, when the first data or the second data is "0" at two consecutive monitoring timings, the multicore WDT monitoring processor 70 of this example determines that the processing performed in the first CPU core 11 or the second CPU core 12 is not operating normally so as to detect an anomaly in the first CPU core 11 or the second CPU core 12. Thus, at this point, the first data is "1" and the second data is "0", but the multicore WDT monitoring processor 70 detects that an anomaly in the first CPU core 11 or the second CPU core 12. Therefore, the output of the multicore WDT monitoring processor 70 remains "1" indicating that the first CPU core 11 and the second CPU core 12 are in a normal state, and the output of the WDT IC 80 remains "0". Then, at the time t4 that is a time after the time t3, both the first data recorded in the first memory area 21 and the second data recorded in the second memory area 22 are updated to "0" by the multicore WDT monitoring processor 70.

After that, the first data recorded in the first memory area 21 is updated, at the time t5, to "1" by the updating processing (or first idle processing) performed next in the first CPU core 11 according the processing priority. However, at the time t6 that is a time after the time t5, the second CPU core 12 is still in an anomalous state, so the second data recorded in the second memory area 22 is not updated (to "1") . Thus, the second data remains "0".

After that, at the time t7 that is a time for a next timing of monitoring performed by the multicore WDT monitoring processor 70, the first data recorded in the first memory area 21 and the second data recorded in the second memory area 22 are read by the multicore WDT monitoring processor 70. Also at this point, the first data is "1" and the second data is "0". Thus, the second data is "0" at the two consecutive monitoring timings (t3 and t7), so the multicore WDT monitoring processor 70 determines that the processing performed in the second CPU core 12 is not operating normally so as to detect an anomaly in the second CPU core 12. Therefore, the output of the multicore WDT monitoring processor 70 becomes "0" indicating an anomaly in the first CPU core 11 or the second CPU core 12. Due to the output of the multicore WDT monitoring processor 70 having been changed from "1" to "0", the WDT IC 80 outputs a reset signal (one pulse signal) to the first CPU core 11 and the second CPU core 12. Accordingly, the first CPU core 11 and the second CPU core 12 restart in response to the reset signal, which permits the second CPU core 12 to return to a normal state. Then, at the time t8 that is a time after the time t7, both the first data recorded in the first memory area 21 and the second data recorded in the second memory area 22 are updated to "0" by the multicore WDT monitoring processor 70.

As described above, the CPU monitoring device according to the present embodiment is configured such that, when the first CPU core 11 or the second CPU core 12 enters into an anomalous state, the multicore WDT monitoring processor 70 detects the anomaly and the WDT IC 80 outputs a reset signal to the first CPU core 11 and the second CPU core 12. Thus, the CPU monitoring device according to the present embodiment permits the multicore CPU 10 (the first CPU core 11 and the second CPU core 12) to restart and return to a normal state quickly when the multicore CPU 10 (the first CPU core 11 or the second CPU core 12) enters into an anomalous state.

The following modification may be made to the multicore CPU system 1 including the CPU monitoring device according to the present embodiment.

For example, the multicore CPU 10 may be configured to include three or more CPU cores. However, in this case, the memory 20 is provided with three or more memory areas that correspond to the three or more CPU cores. Further, idle processing (idle processing unit) is assigned to each of the three or more CPU cores, the idle processing having the lowest processing priority in the CPU core and updating data recorded in a memory area arranged corresponding to the CPU core. Updating processing (update processing unit 50) is dynamically assigned to one of the three or more CPU cores according to a load state of each of the three or more CPU cores. Non-updating processing (non-update processing unit 60) is also dynamically assigned to one of the three or more CPU cores according to the load state of each of the three or more CPU cores. The multicore WDT monitoring processor 70 monitors and updates data of each of the three or more memory areas arranged corresponding to the three or more CPU cores. The modification described above also permits the multicore CPU 10 to restart and return to a normal state quickly when the multicore CPU 10 enters into an anomalous state even if the multicore CPU 10 includes three or more CPU cores.

The embodiments described above are just examples to facilitate understanding of the present invention, and the invention is not limited to these embodiments. Various modifications and alterations may be made hereto without departing from the spirit of the invention specified in the claims.

### Reference Signs List

- 1: multicore CPU system
- 10: multicore CPU
- 11: first CPU core
- 12: second CPU core
- 20: memory
- 21: first memory area
- 22: second memory area
- 30: first idle processing unit
- 40: second idle processing unit
- 50: update processing unit
- 60: non-update processing unit
- 70: multicore WDT monitoring processor
- 80: WDT IC

## Claims

1. A CPU monitoring device comprising:
a memory that includes a plurality of memory areas arranged corresponding to a plurality of CPU cores;
a monitoring unit that monitors whether processing performed in the plurality of CPU cores is operating normally, on the basis of an update state of data recorded in the plurality of memory areas; and
a reset signal output unit that outputs a reset signal to the plurality of CPU cores when the monitoring unit has detected that the processing performed in the plurality of CPU cores is not operating normally, wherein
idle processing is assigned to each of the plurality of CPU cores, the idle processing having the lowest processing priority in the CPU core and updating data recorded in a memory area arranged corresponding to the CPU core.

2. The CPU monitoring device according to claim 1, wherein
processing other than the idle processing is dynamically assigned to each of the plurality of CPU cores according to a load state of each of the plurality of CPU cores.

3. The CPU monitoring device according to claim 2, wherein
the processing other than the idle processing includes first processing that includes processing of updating data recorded in the memory area arranged corresponding to the CPU core assigned to the first processing.

4. The CPU monitoring device according to claim 2 or 3, wherein
the processing other than the idle processing includes second processing that does not include processing of updating data recorded in the memory area arranged corresponding to the CPU core assigned to the second processing.

5. The CPU monitoring device according to claim 4, wherein
the second processing is assigned to each of the plurality of CPU cores within less than 50% of resources of the CPU core.
